# EUROPEAN PATENT APPLICATION

(11) **EP 4 825 826 A1**
(43) Date of publication of application: **21.10.2026**
(21) Application number: 24902614.7
(22) Date of filing: 02.12.2024
(51) Int. Cl.: C04B 35/10, C04B 35/04, C04B 35/58, C04B 35/622

(54) **FLUORESCENT CERAMIC AND PREPARATION METHOD THEREFOR, AND LIGHT-EMITTING DEVICE**

(30) Priority: 14.12.2023 CN 202311729912
(71) Applicant: YLX Incorporated, Shenzhen, Guangdong 518000 (CN)
(72) Inventor: FENG, Shaowei, Shenzhen Guangdong 518000 (CN); LI, Qian, Shenzhen Guangdong 518000 (CN); WANG, Yangang, Shenzhen Guangdong 518000 (CN)
(74) Representative: Metida
(86) International application number: PCT/CN2024/136059
(87) International publication number: WO 2025/124193

(57) **Abstract**

The present disclosure provides a fluorescent ceramic, includes a matrix, fluorescent particles, and a high-refractive-index phase. The fluorescent particles are distributed within the matrix, and the high-refractive-index phase is distributed within the matrix. The high-refractive-index phase includes at least one compound having the general formula A₂B₂O₇; wherein A is selected from any one of La, Ce, Pr, Nd, Sm, Eu, Gd, Tb, Dy, Ho, Er, Tm, Yb, and Lu, and B is selected from any one of Ti, Zr, and Hf. A ratio of a refractive index of the high-refractive-index phase to a refractive index of the fluorescent particles is greater than or equal to 1.1. In the fluorescent ceramic and the method provided in the present disclosure the high-refractive-index phase can effectively control light diffusion during laser excitation, the efficient absorption and conversion of incident laser is enhanced, and the comprehensive performance of a light-emitting device is improved. Furthermore, the present disclosure also provides a preparation method for the fluorescent ceramic and a light-emitting device.

## Description

### FIELD

The disclosure relates to light-emitting technologies, and more particularly, to a fluorescent ceramic, a preparation method for the fluorescent ceramic, and a light-emitting device.

### BACKGROUND

In recent years, high-power blue laser diodes (LDs) have become the mainstream excitation light sources. Thus, the demand for high thermal conductivity of phosphor materials is increased, which has been a key technical challenge that needs to be solved for the development of high-power lighting devices. Compared to the existing phosphor-glass composite materials, fluorescent ceramic materials have significantly higher thermal conductivity than that of the phosphor-glass composite materials (typically 5 to 10 times as much as the thermal conductivity of the phosphor-glass composite materials). Therefore, the fluorescent ceramic materials are considered as one of the most suitable phosphor materials for high-power solid-state lighting. In addition, compared to LEDs, lasers sources, which function as excitation light sources, has advantages such as high brightness, long irradiation distance, higher conversion efficiency, and longer service life.

However, laser spot intensity distribution usually exhibits Gaussian characteristics. After exciting the phosphor material, the emitted light may have uneven optical field distribution, and the light spot irradiated on the fluorescent ceramic undergoes lateral expansion, resulting light diffusion problems and reduced effective light intensity. Therefore, it is necessary to design the optical performance of the structure of the fluorescent ceramic to effectively suppress the lateral diffusion of the laser spot, thereby enhancing the effective luminous flux of the light source.

### SUMMARY

The purpose of the present disclosure is to provide a fluorescent ceramic, a preparation method for the fluorescent ceramic, and a light-emitting device to solve at least one of the shortcomings mentioned above.

In a first aspect, a fluorescent ceramic is provided according to an embodiment of the present disclosure. The fluorescent ceramic includes a matrix, a plurality of fluorescent particles, and a high-refractive-index phase. The plurality of fluorescent particles is distributed in the matrix, and the high-refractive-index phase is distributed in the matrix. The high-refractive-index phase includes at least one compound having a general formula of A₂B₂O₇, wherein A is selected from a group consisting of La, Ce, Pr, Nd, Sm, Eu, Gd, Tb, Dy, Ho, Er, Tm, Yb, and Lu, B is selected from a group consisting of Ti, Zr, and Hf. A ratio of a refractive index of the high-refractive-index phase to a refractive index of the plurality of fluorescent particles is greater than or equal to 1.1.

In some embodiments, the refractive index of the high-refractive-index phase for light with a wavelength of 400 nm to 600 nm is 2.0 to 2.5.

In some embodiments, a volume of the high-refractive-index phase accounts for 1 % to 20 % of a total volume of the fluorescent ceramic.

In some embodiments, the high-refractive-index phase is coated on the plurality of fluorescent particles.

In some embodiments, an average thickness of the high-refractive-index phase coated on the fluorescent particles is 400 nm to 700 nm.

In some embodiments, the refractive index of the plurality of fluorescent particles is 1.4 to 1.9.

In some embodiments, the matrix includes at least one of Al₂O₃, MgO, γ-AlON, BN, AlN, and Si₃N₄.

In some embodiments, the plurality of fluorescent particles is oxide, the matrix includes at least one of Al₂O₃ and MgO; or the plurality of fluorescent particles includes nitride, the matrix includes at least one of γ-AlON, BN, and AlN; or the plurality of fluorescent particles includes β-Sialon:Eu²⁺, the matrix includes γ-AlON.

In some embodiments, the fluorescent ceramic further includes a grain boundary phase distributed between the high-refractive-index phase and the matrix.

In some embodiments, a volume of the grain boundary phase accounts for 1 % to 5 % of a total volume of the fluorescent ceramic.

In some embodiments, the grain boundary phase is formed by a reaction between a portion of the high-refractive-index phase and the matrix during a sintering process.

In some embodiments, the fluorescent ceramic further includes a plurality of pores, and a sum of volumes of the plurality of pores is less than 5 % of a total volume of the fluorescent ceramic.

In a second aspect, a preparation method for the fluorescent ceramic is provided according to an embodiment of the present disclosure. The method includes: mix a high-refractive-index phase precursor with a plurality of fluorescent particles to obtain a mixture; add a dispersant and a binder into the mixture to form a slurry, and vacuum dry the slurry to obtain a composite powder; and mix and pre-sinter the composite powder with a matrix, and then sinter the composite powder and the matrix to form the fluorescent ceramic.

In some embodiments, a particle size of each of the plurality of the high-refractive-index phase precursors is 0.4 µm to 1 µm.

In a third aspect, a light-emitting device is provided according to an embodiment of the present disclosure. The light-emitting device includes an excitation light source and the fluorescent ceramic mentioned above. The excitation light source is configured to excite the fluorescent ceramic to produce stimulated light.

The fluorescent ceramic and the preparation method for the fluorescent ceramic provided in the present disclosure, on the one hand, enable the high-refractive-index phase to effectively control light diffusion during the laser excitation process. Thereby, the efficient absorption and conversion of incident laser by the fluorescent ceramic are improved. At the same time, since a refractive index gradient is formed between the high-refractive-index phase and the fluorescent particles, it is possible to increase light scattering during the excitation process while reducing lateral diffusion of light within the fluorescent ceramic, thereby improving the comprehensive performance of the fluorescent ceramic. On the other hand, the matrix is tightly coated on the fluorescent particles, enabling timely conduction and diffusion of heat generated during the light-emitting process of the fluorescent particles. Thereby the thermal stability of the fluorescent ceramic is improved. Through the above structural and compositional design, an optical power threshold of the fluorescent ceramic can be enhanced, and the comprehensive performance of the light-emitting device including the fluorescent ceramic can be improved.

These and other aspects of the present disclosure will now be described clearer and more understandable by way of examples only.

### BRIEF DESCRIPTION OF THE DRAWINGS

Implementations of the present technology will now be described, by way of embodiment, with reference to the attached figures. Obviously, the drawings are only some embodiments of the present disclosure. For those of ordinary skill in the art, other drawings can be obtained based on these drawings without creative work.
FIG. 1 is a diagrammatic view of a fluorescent ceramic according to an embodiment of the present disclosure.
FIG. 2 is a diagrammatic view of a light-emitting device according to embodiment 5 of the present disclosure.

### DETAILED DESCRIPTION OF THE DISCLOSURE

Implementations of the disclosure will now be described clearly and completely, by way of embodiments only, with reference to the drawings. Obviously, the described embodiments are only portions of the embodiments of the present disclosure, rather than all the embodiments.

At present, a phosphor conversion material for laser lighting source may include porous YAG:Ce fluorescent ceramic or Al₂O₃-YAG:Ce composite phase fluorescent ceramic. The pores of the porous YAG:Ce fluorescent ceramic are used as scattering centers to improve the absorption efficiency of blue light and achieve high light conversion efficiency. However, due to low thermal conductivity, a power saturation threshold of the porous YAG:Ce fluorescent ceramic is low. Thereby, the porous YAG:Ce fluorescent ceramic is difficult to withstand continuous excitation by high-power density lasers.

As a size of the laser spot becomes smaller, an optical power per unit area increases accordingly, resulting strict requirement on the heat dissipation performance of the fluorescent ceramic. The Al₂O₃-YAG:Ce composite phase fluorescent ceramic is one choice. Due to a high thermal conductivity of the Al₂O₃ ceramic, the thermal stability of the YAG:Ce fluorescent ceramic can be improved. There are usually two ways to obtain the Al₂O₃-YAG:Ce composite phase fluorescent ceramic. One way is to co-sinter commercial YAG:Ce phosphor powder with Al₂O₃ powder to obtain the Al₂O₃-YAG:Ce composite phase fluorescent ceramic. Another way is to mix Y₂O₃, CeO₂, and excess Al₂O₃ powder in a certain ratio, and then prepare a YAG:Ce ceramic containing excess Al₂O₃ (as the Al₂O₃-YAG:Ce composite phase fluorescent ceramic).

In the first way, although the alumina phase of the Al₂O₃-YAG:Ce composite phase fluorescent ceramic has high thermal conductivity and high mechanical strength, the alumina phase is a main matrix phase, occupying most of the volume, which is not conducive to the effective absorption of blue laser by the phosphor, affecting an effective conversion of blue laser by the phosphor. Moreover, refractive indices of the alumina matrix and yttrium aluminum garnet fluorescent particles are close, resulting in insufficient scattering of an incident blue laser, which is not conducive to reducing the lateral diffusion of the laser spot, cannot effectively improve an absorption rate of blue light, and makes it difficult to obtain uniform optical field output light and higher luminous flux.

Therefore, a composite fluorescent ceramic material with a refractive index gradient is needed. Thus, the present application provides a fluorescent ceramic, a preparation method for the fluorescent ceramic, and a light-emitting device to address at least one of the above shortcomings.

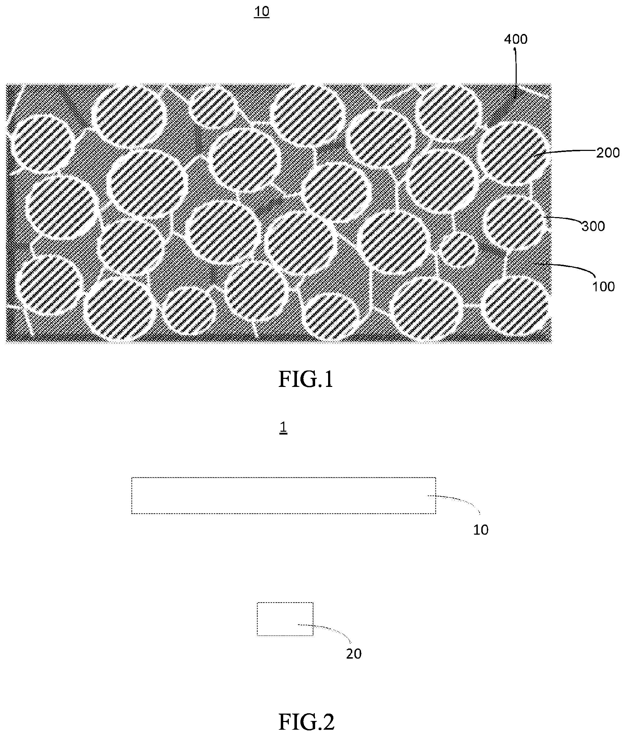

Referring to FIG. 1, a fluorescent ceramic 10 is provided according to an embodiment of the present disclosure. The fluorescent ceramic 10 includes a matrix 100, a plurality of fluorescent particles 200 distributed in the matrix 100, and a high-refractive-index phase 300 distributed in the matrix 100. The high-refractive-index phase includes at least one compound having a general formula of A₂B₂O₇, wherein the element "A" is selected from any one of La, Ce, Pr, Nd, Sm, Eu, Gd, Tb, Dy, Ho, Er, Tm, Yb, and Lu, and the element "B" is selected from any one of Ti, Zr, and Hf. A ratio of a refractive index of the high-refractive-index phase to a refractive index of the plurality of fluorescent particles is greater than or equal to 1.1.

In a possible embodiment, the high-refractive-index phase 300 includes at least one compound having the general formula A₂B₂O₇. That is, the high-refractive-index phase 300 may include only one compound having the general formula A₂B₂O₇, or may include a plurality of compounds having the general formula of A₂B₂O₇, where "a plurality" means two or more.

The element "A" may be selected from any one of La, Ce, Pr, Nd, Sm, Eu, Gd, Tb, Dy, Ho, Er, Tm, Yb, and Lu, and the element "B" may be selected from any one of Ti, Zr, and Hf. For example, in some embodiments of the present disclosure, the high-refractive-index phase 300 may include at least one of La₂Ti₂O₇, Lu₂Ti₂O₇, and Y₂Hf₂O₇. La₂Ti₂O₇, Lu₂Ti₂O₇, and Y₂Hf₂O₇ are transparent high-refractive-index materials. In the present disclosure, the high-refractive-index phase itself does not participate in an excitation process of light to become stimulated light. But an excitation light entering the fluorescent ceramic can be scattered by the high-refractive-index phase due to high refractive index and high transparency of the high-refractive-index phase. So that, the excitation light after scattering may contact more fluorescent particles, thereby increasing the number of fluorescent particles participating in the excitation process and improving the excitation efficiency of the excitation light.

The ratio of the refractive index of the high-refractive-index phase to the refractive index of the fluorescent particles is greater than or equal to 1.1. That is, the refractive index of the high-refractive-index phase 300 is greater than the refractive index of the fluorescent particles 200. The refractive index refers to a refractive index of the excitation light entering the fluorescent ceramic and a refractive index of a converted stimulated light, particularly for a refractive index of light with a wavelength of 400 nm to 600 nm. Since the high-refractive-index phase 300 has a higher refractive index than the fluorescent particles 200, a refractive index gradient is formed with the fluorescent particles 200. Thereby light scattering is increased during the excitation process while lateral diffusion of light in the fluorescent ceramic is reduced, and a comprehensive performance of the fluorescent ceramic is improved.

In some embodiments of the present disclosure, the high-refractive-index phase 300 may be uniformly or non-uniformly distributed in the matrix. The high-refractive-index phase 300 may adhere to or coat on the fluorescent particles 200. Or the high-refractive-index phase 300 may partially adhere to or coat on the fluorescent particles 200 and partially be uniformly or non-uniformly distributed in the matrix.

The refractive index of the high-refractive-index phase is 2.0 to 2.5. In some embodiments of the present disclosure, the refractive index refers to a refractive index of the high-refractive-index phase for light with a wavelength of 400 nm to 700 nm being 2.0 to 2.5. For example, in another embodiment of the present disclosure, the high refractive index refers to the refractive index of the high-refractive-index phase for blue and yellow light with a wavelength of 400 nm to 600 nm being 2.0 to 2.5. In yet another embodiment of the present disclosure, the refractive index of 2.0 to 2.5 for the high-refractive-index phase 300 is specifically for blue light with a wavelength of 400 nm to 470 nm. The refractive index of the fluorescent particles 200 is generally between 1.4 and 1.9. Thereby the refractive index gradient is formed by the high-refractive-index phase 300 and the fluorescent particles 200. When the excitation light is blue or yellow light, the refractive index gradient can increase the scattering of the excitation light during the excitation process (mainly longitudinal, parallel to a direction of the incident excitation light) while reduce the lateral diffusion of an excitation light spot in the fluorescent ceramic (perpendicular to the direction of the incident excitation light). Thereby the comprehensive performance of the fluorescent ceramic is improved.

In some embodiments of the present disclosure, a volume of the high-refractive-index phase 300 accounts for 1% to 20% of a total volume of the fluorescent ceramic. In one embodiment of the present disclosure, the volume of the high-refractive-index phase 300 accounts for 5% to 10% of the total volume of the fluorescent ceramic, for example, specifically 5%, 6%, 8%, and 10%. It should be noted that, in some embodiments of the present disclosure, the inventors have found through long-term experiments that when the volume of the high-refractive-index phase 300 exceeds 20% (excluding 20%) of the total volume of the fluorescent ceramic, it leads to a decrease in a total volume of the fluorescent particles 200 in the fluorescent ceramic, reducing luminous efficiency. Moreover, due to the high refractive index of the high-refractive-index phase, when a content of the high-refractive-index phase is too high, a reflectivity to light increases, and the incident excitation light will be reflected and lost from a surface of the fluorescent ceramic, reducing the overall luminous efficiency of the fluorescent ceramic. When the volume of the high-refractive-index phase 300 is less than 1% (excluding 1%) of the total volume of the fluorescent ceramic, the scattering of light during excitation is insufficient, and the reduction of lateral diffusion of the excitation light spot is insufficient, failing to effectively improve the blue light extraction efficiency. Additionally, the high-refractive-index phase 300 can improve a density of the fluorescent ceramic. When the content of the high-refractive-index phase 300 is too low, the density of the fluorescent ceramic will be reduced, a number of pores in the fluorescent ceramic will increase, and a structural optimization of the fluorescent ceramic will be insufficient.

The fluorescent particles 200 can generate stimulated light under the excitation of excitation light. In particular, the fluorescent particles 200 can generate stimulated light in the visible light range under the excitation of blue light (440 nm to 470 nm). In an embodiment, a material of the fluorescent particles 200 includes at least one selected from Y₃Al₅O₁₂:Ce³⁺, Lu₃Al₅O₁₂:Ce³⁺, Gd₃(Al,Ga)₅O₁₂:Ce³⁺, Lu₃(Al,Ga)₅O₁₂:Ce³⁺, (Ca,Sr)SiAlN₃:Eu²⁺, (Ba,Sr)₂Si₅N₈:Eu²⁺, Sr[LiAl₃N₄]:Eu²⁺, and β-Sialon:Eu²⁺.

A particle size of the fluorescent particle 200 is in range of 0.5 µm to 40 µm, preferably 5 µm to 20 µm. Preferably, the fluorescent particles 200 may be selected as particles with uniform particle morphology, which is beneficial for uniformly distributing of the fluorescent particles 200 in the matrix 100. Moreover, during a preparation process, fluorescent particles 200 with uniform morphology are more conducive to uniform mixing with the high-refractive-index phase 300 and facilitate the formation of a structure where the high-refractive-index phase 300 coats on the fluorescent particles 200.

An increase in a proportion of fluorescent particles 200 can improve the conversion efficiency of the fluorescent ceramic. However, if the proportion of fluorescent particles 200 in the fluorescent ceramic is too high, the corresponding proportion of the matrix will be relatively low. During a process of excitation light irradiation on the fluorescent ceramic, heat generated during the process accumulates too high, and the matrix with a low proportion is insufficient for heat conduction and diffusion. The heat dissipation effect of the fluorescent ceramic will be reduced, and thermal quenching may happen. Preferably, the total volume of the fluorescent particles 200 may account for 20% to 80% of the total volume of the fluorescent ceramic. In some embodiments of the present disclosure, the total volume of the fluorescent particles 200 may account for 40% to 60% of the total volume of the fluorescent ceramic.

In a preferred embodiment, the high-refractive-index phase 300 may coat on the fluorescent particles 200, allowing the high-refractive-index phase 300 to be as close as possible to the fluorescent particles 200. Thereby the scattering effect of the incident excitation light by the high-refractive-index phase 300 may significantly improve, which is beneficial for reducing the lateral diffusion of the incident excitation light spot and improving the excitation efficiency of the excitation light. When the high-refractive-index phase 300 is distributed in the matrix at a distance from the fluorescent particles 200 exceeding a size of the fluorescent particle 200 (that is, the high-refractive-index phase 300 does not coat the fluorescent particles 200), the effect of the high-refractive-index phase 300 on improving the scattering of the incident excitation light and reducing the lateral diffusion of the excitation light spot is weaker compared to when the high-refractive-index phase 300 is as close as possible to the fluorescent particles 200. At the same time, by coating the high-refractive-index phase 300 on the fluorescent particles 200, which can prevent the agglomeration and accumulation of the high-refractive-index phase 300 during the preparation process. Thus, the formation of reflection centers by the aggregated high-refractive-index phase that would wastage blue light may be avoided. If a thickness of the high-refractive-index phase 300 coated on the fluorescent particles 200 is too high, the high-refractive-index phase 300 will form a reflection that reflects the incident excitation light outward, and the incident excitation light will be prevented from passing through the high-refractive-index phase to reach the fluorescent particles. Thereby the contact efficiency and probability between the excitation light and the fluorescent particles 200 may be reduced and the excitation efficiency may be lower. If the thickness of the high-refractive-index phase is too thin, the high-refractive-index phase will not achieve a good scattering effect. Preferably, an average thickness of the high-refractive-index phase 300 coated on the fluorescent particles 200 may be 400 nm to 700 nm, for example, 500 nm or 600 nm.

Specifically, the matrix 100 may be a high thermal conductivity ceramic material, for example, a thermally conductive ceramic material with a thermal conductivity greater than or equal to 7 W/(m·K). In an embodiment, the matrix 100 may be includes at least one of Al₂O₃, MgO, γ-AlON, BN, AlN, and Si₃N₄. A refractive index of the matrix 100 is close to that of the fluorescent particles 200. Since the matrix is the main phase, in the total volume of the fluorescent ceramic 10, a volume proportion of the matrix 100 exceeds 20%. If the refractive index of the matrix 100 forms a high gradient difference with the refractive index of the fluorescent particles 200, it will cause the incident excitation light to be reflected and lost by the fluorescent ceramic 10. Therefore, the refractive indices of the matrix 100 and the fluorescent particles 200 are chosen to be similar (difference less than 0.15). In some embodiments of the present disclosure, the refractive index of the matrix is 1.4 to 1.7. The matrix 100 is tightly coated on the fluorescent particles 200 and the high-refractive-index phase 300. The matrix 100 can conduct and diffuse the heat generated during the light-emitting process of the fluorescent particles 200 and the high-refractive-index phase 300, thereby improving the thermal stability of the fluorescent ceramic.

In an embodiment, to improve the tightness of an interface between the matrix 100 and the fluorescent particles 200 when coated, different matrices 100 may be selected for different fluorescent particles 200. Specifically, a matrix 100 that is more similar in physical and chemical properties to the fluorescent particles 200 is chosen to improve the compatibility between the matrix 100 and the fluorescent particles 200. In an embodiment, when the fluorescent particle 200 is oxide, the matrix 100 may include at least one of Al₂O₃ and MgO. In another embodiment, when the fluorescent particle 200 is nitride, the matrix 100 may include at least one of γ-AlON, BN, and AlN. In yet another embodiment, when the fluorescent particle 200 is β-Sialon:Eu²⁺, the matrix 100 may include γ-AlON.

The high-refractive-index phase 300 may undergo a chemical reaction with the matrix 100 during the sintering process. Products of the reaction process vary depending on types of the high-refractive-index phase 300 and the matrix 100.

The fluorescent ceramic 10 may further includes a grain boundary phase 400. The grain boundary phase 400 may be formed by a reaction between a portion of the high-refractive-index phase 300 and the matrix 100 during the sintering process. Or the grain boundary phase 400 may be formed by adding a grain boundary phase raw material with high fluidity before preparation, which enters pores around the fluorescent particles 200 and the high-refractive-index phase 300 during the preparation process. The method for preparing the grain boundary phase 400 is not limited to these. The grain boundary phase 400 effectively reduces the pores around the fluorescent particles 200 and the high-refractive-index phase 300, improves the density of the fluorescent ceramic, and thereby can enhance the thermal conductivity of the fluorescent ceramic 10.

The formation of the grain boundary phase 400 promotes the formation of a dense phase at a contact surface between the high-refractive-index phase 300 and the matrix 100, eliminating or reducing a volume of residual pores between the high-refractive-index phase 300, the fluorescent particles 200, and the matrix 100. Thereby a proportion of a total pore volume in the total volume of the fluorescent ceramic is reduced and the density of the fluorescent ceramic is improved. The fluorescent ceramic 10 further includes a plurality of pores. The total volume of the pores in the fluorescent ceramic may be less than 5% of the total volume of the fluorescent ceramic. In some embodiments of the present disclosure, the volume of the pores in the fluorescent ceramic may be less than 1%, 2%, 3%, 4%, or 5% of the total volume of the fluorescent ceramic. In a preferred embodiment of the present disclosure, the volume of the pores in the fluorescent ceramic may be less than 1% or 2% of the total volume of the fluorescent ceramic.

A volume of the grain boundary phase 400 may account for 1% to 5% of the total volume of the fluorescent ceramic 10. Within this volume ratio range, it can be ensured that only a portion of the high-refractive-index phase 300 reacts with the matrix 100, thereby ensuring a moderate volume content of the high-refractive-index phase 300. At the same time, the matrix 100 can well coat the high-refractive-index phase 300. Furthermore, the total volume of the grain boundary phase 400 is related to a total volume of residual pores between the high-refractive-index phase 300 and the matrix 100. That is, a sum of the total volume of the grain boundary phase 400 and the volume of pores in the fluorescent ceramic, is equal to a volume of pores in the fluorescent ceramic without the grain boundary phase, and is also equal to a volume of residual pores between the high-refractive-index phase 300 and the matrix 100 during preparation.

A preparation method for the fluorescent ceramic 10 includes the following steps.

First, a plurality of high-refractive-index phase precursors is mixed with a plurality of fluorescent particles 200 to obtain a mixture. During mixing, a dispersant and a binder are added in the mixture and the mixture is stirred. After stirring uniformly, a slurry is formed. During this process, the high-refractive-index phase precursors adheres to surfaces of the fluorescent particles 200, forming a coating on the fluorescent particles 200 and being distributed and dispersed. The slurry is vacuum-dried to obtain a composite powder for later use.

The high-refractive-index phase precursor can be preprepared. In some embodiments, a method for preparing of the high-refractive-index phase precursor is as follows: according to the structure of the high-refractive-index phase 300 (that is, the compound according to the general formula A₂B₂O₇ mentioned above), corresponding oxide raw materials are selected, an additive is added, and then grinding is performed to uniformly distribute the oxide raw materials to form a primary slurry. Then the primary slurry is subjected to low-temperature calcination to form the high-refractive-index phase precursor. Further, the obtained high-refractive-index phase precursor can be ground to obtain the high-refractive-index phase precursor with more uniform particle size and more stable particle morphology. A grinding method can be ball milling, which is not limited to this.

In some embodiments of the present disclosure, a particle size of the high-refractive-index phase precursor is 0.4 µm to 1 µm. The particle size of the high-refractive-index phase precursor is in the sub-micron range. The high-refractive-index phase precursor can diffuse uniformly, thereby occupying the pore positions in the fluorescent ceramic and further improving the density of the fluorescent ceramic. At the same time, during the preparation of the fluorescent ceramic, the high-refractive-index phase precursor also acts as a sintering aid, promoting the densification of the fluorescent ceramic.

The composite powder is mixed with a matrix 100 and then pre-sintered. For example, it can be done as follows: the composite powder is mixed with the matrix 100 and then sieved. The mixture after sieved is sintered at 500-800°C for at least 2 hours, and then treated with cold isostatic pressing at 50-250 MPa to increase density. After cold isostatic pressing treatment, the mixture is pre-sintered in air to remove organic additives or impurities.

After pre-sintering, sintering is performed to form the fluorescent ceramic. Sintering can be performed under the following conditions: under vacuum or a protective atmosphere, hot pressing or spark plasma sintering is performed. The sintering temperature is 1400°C to 1700°C, and the sintering pressure is 10 MPa to 100 MPa. During the sintering process, the high-refractive-index phase precursor forms the high-refractive-index phase 300, and a portion of the high-refractive-index phase 300 chemically reacts with the matrix 100, thereby forming the grain boundary phase 400.

After sintering is completed, the fluorescent ceramic 10 can also be subjected to annealing treatment. Specifically, the annealing treatment can be performed in an air or oxygen atmosphere. The annealing temperature is 800°C to 1300°C, and the holding time is 10 hours to 100 hours. After annealing treatment, internal stress in the fluorescent ceramic 10 can be eliminated, avoiding subsequent cracking or fracturing of the fluorescent ceramic 10. After annealing, according to usage requirements, the fluorescent ceramic can be further subjected to operations such as grinding and polishing, and cut into a required size.

Implementations of the present disclosure will now be described by way of embodiments.

### Embodiment 1

YAG:Ce³⁺ was selected as the fluorescent particles, La₂Ti₂O₇ was selected as the high-refractive-index phase, a mixture of Al₂O₃ and MgO was selected as the matrix. And a portion of the high-refractive-index phase and the matrix reacted to form LaAlO₃ as the grain boundary phase.

First, the high-refractive-index phase precursors were mixed with the fluorescent particles. During mixing, a dispersant and a binder were added and stirred. After stirring uniformly, a slurry was formed. During this process, the high-refractive-index phase precursors adhered to the surface of the fluorescent particles and were uniformly dispersed. The slurry was vacuum-dried to obtain a composite powder for later use. The composite powder was mixed with the matrix, sieved, calcined at 500-800°C for at least 2 hours, and then treated with cold isostatic pressing at 50-250 MPa. After treatment, it was pre-sintered in air to remove organic components.

After pre-sintering, spark plasma sintering was performed under vacuum or a protective atmosphere. A sintering temperature was 1400°C to 1700°C, and a sintering pressure was 10 MPa to 100 MPa. After sintering, a fluorescent ceramic was obtained. After sintering was completed, the fluorescent ceramic 10 was subjected to annealing treatment. The annealing treatment can be performed in an air or oxygen atmosphere. An annealing temperature was 800°C to 1300°C, and a holding time was 10 hours to 100 hours. After annealing treatment, internal stress in the fluorescent ceramic 10 can be eliminated.

### Embodiment 2

LuAG:Ce³⁺ was selected as the fluorescent particles, Lu₂Ti₂O₇ was selected as the high-refractive-index phase, a mixture of AlON and Al₂O₃ was selected as the matrix. And a portion of the high-refractive-index phase and the matrix reacted to form LuAlO₃ as the grain boundary phase.

First, the high-refractive-index phase precursors were mixed with the fluorescent particles. During mixing, a dispersant and a binder were added and stirred. After stirring uniformly, a slurry was formed. During this process, the high-refractive-index phase precursors adhered to the surfaces of the fluorescent particles and were uniformly dispersed. The slurry was vacuum-dried to obtain a composite powder for later use. The composite powder was mixed with the matrix, sieved, calcined at 500-800°C for at least 2 hours, and then treated with cold isostatic pressing at 50-250 MPa. After treatment, it was pre-sintered in air to remove organic components.

After pre-sintering, spark plasma sintering was performed under vacuum or a protective atmosphere. A sintering temperature was 1400°C to 1700°C, and a sintering pressure was 10 MPa to 100 MPa. After sintering, a fluorescent ceramic was obtained. After sintering was completed, the fluorescent ceramic 10 was subjected to annealing treatment. The annealing treatment can be performed in an air or oxygen atmosphere. An annealing temperature was 800°C to 1300°C, and a holding time was 10 hours to 100 hours. After annealing treatment, internal stress in the fluorescent ceramic 10 can be eliminated.

### Embodiment 3

(Ca,Sr)SiAlN₃:Eu²⁺ was selected as the fluorescent particles, Lu₂Ti₂O₇ was selected as the high-refractive-index phase, a mixture of AlON and Al₂O₃ was selected as the matrix. And a portion of the high-refractive-index phase and the matrix reacted to form LaAlO₃ as the grain boundary phase.

First, the high-refractive-index phase precursors were mixed with the fluorescent particles. During mixing, a dispersant and a binder were added and stirred. After stirring uniformly, a slurry was formed. During this process, the high-refractive-index phase precursors adhered to the surfaces of the fluorescent particles and were uniformly dispersed. The slurry was vacuum-dried to obtain a composite powder for later use. The composite powder was mixed with the matrix, sieved, calcined at 500-800°C for at least 2 hours, and then treated with cold isostatic pressing at 50-250 MPa. After treatment, it was pre-sintered in air to remove organic components.

After pre-sintering, spark plasma sintering was performed under vacuum or a protective atmosphere. A sintering temperature was 1400°C to 1700°C, and a sintering pressure was 10 MPa to 100 MPa. After sintering, a fluorescent ceramic was obtained. After sintering was completed, the fluorescent ceramic 10 was subjected to annealing treatment. The annealing treatment can be performed in an air or oxygen atmosphere. An annealing temperature was 800°C to 1300°C, and a holding time was 10 hours to 100 hours. After annealing treatment, internal stress in the fluorescent ceramic 10 can be eliminated.

### Embodiment 4

β-Sialon:Eu²⁺ was selected as the fluorescent particles, Y₂Hf₂O₇ was selected as the high-refractive-index phase, a mixture of AlON and Al₂O₃ was selected as the matrix. And a portion of the high-refractive-index phase and the matrix reacted to form YAlO₃ as the grain boundary phase.

First, the high-refractive-index phase precursors were mixed with the fluorescent particles. During mixing, a dispersant and a binder were added and stirred. After stirring uniformly, a slurry was formed. During this process, the high-refractive-index phase precursors adhered to the surfaces of the fluorescent particles and were uniformly dispersed. The slurry was vacuum-dried to obtain a composite powder for later use. The composite powder was mixed with the matrix, sieved, calcined at 500-800°C for at least 2 hours, and then treated with cold isostatic pressing at 50-250 MPa. After treatment, it was pre-sintered in air to remove organic components.

After pre-sintering, spark plasma sintering was performed under vacuum or a protective atmosphere. A sintering temperature was 1400°C to 1700°C, and a sintering pressure was 10 MPa to 100 MPa. After sintering, a fluorescent ceramic was obtained. After sintering was completed, the fluorescent ceramic 10 was subjected to annealing treatment. The annealing treatment can be performed in an air or oxygen atmosphere. An annealing temperature was 800°C to 1300°C, and a holding time was 10 hours to 100 hours. After annealing treatment, internal stress in the fluorescent ceramic 10 can be eliminated.

The fluorescent ceramic and the preparation method forthe same provided in the present disclosure, on the one hand, enable the high-refractive-index phase to effectively control light diffusion during the laser excitation process. Thereby, the efficient absorption and conversion of incident laser by the fluorescent ceramic are improved. On the other hand, the matrix is tightly coated on the fluorescent particles, enabling timely conduction and diffusion of heat generated during the light-emitting process of the fluorescent particles. Thereby the thermal stability of the fluorescent ceramic is improved. Through the above structural and compositional design, an optical power threshold of the fluorescent ceramic can be enhanced, and the comprehensive performance of the light-emitting device including the fluorescent ceramic can be improved.

### Embodiment 5

Referring to FIG. 2, light-emitting device 1 is provided according to an embodiment of the present disclosure. The light-emitting device 1 includes an excitation light source 20 and the fluorescent ceramic 10. The laser light source 20 emits excitation light to excite the fluorescent ceramic 10 to produce stimulated light. The fluorescent ceramic 10 may be any one of the embodiments mentioned above. For details of the fluorescent ceramic 10, please refer to the relevant content of the embodiments mentioned above.

The excitation light source 20 may be, for example, a blue light source. In some other embodiments, the excitation light source 20 may also be a light source of other colors, which is not limited here.

The disclosure is illustrative only, which may not limit the patent scope of the present disclosure. Those skilled in the art can make other changes and modifications according to the technical idea of the present disclosure, or directly or indirectly applied the art in other related technical fields, all such changes, modifications and applications fall within the protective scope of the claims of the present disclosure.

## Claims

1. A fluorescent ceramic, **characterized by** comprising:
a matrix;
a plurality of fluorescent particles distributed in the matrix; and
a high-refractive-index phase distributed in the matrix, the high-refractive-index phase comprising at least one compound having a general formula of A₂B₂O₇, wherein A is selected from a group consisting of La, Ce, Pr, Nd, Sm, Eu, Gd, Tb, Dy, Ho, Er, Tm, Yb, and Lu, B is selected from a group consisting of Ti, Zr, and Hf, a ratio of a refractive index of the high-refractive-index phase to a refractive index of the plurality of fluorescent particles is greater than or equal to 1.1.

2. The fluorescent ceramic of claim 1, **characterized in that**, the refractive index of the high-refractive-index phase for light with a wavelength of 400 nm to 600 nm is 2.0 to 2.5.

3. The fluorescent ceramic of claim 1, **characterized in that**, a volume of the high-refractive-index phase accounts for 1 % to 20 % of a total volume of the fluorescent ceramic.

4. The fluorescent ceramic of any one of claims 13, **characterized in that**, the high-refractive-index phase is coated on the plurality of fluorescent particles.

5. The fluorescent ceramic of claim 4, **characterized in that**, an average thickness of the high-refractive-index phase coated on the fluorescent particles is 400 nm to 700 nm.

6. The fluorescent ceramic of claim 2, **characterized in that**, the refractive index of the plurality of fluorescent particles is 1.4 to 1.9.

7. The fluorescent ceramic of claim 1, **characterized in that**, the matrix comprises at least one of Al₂O₃, MgO, γ-AlON, BN, AlN, and Si₃N₄.

8. The fluorescent ceramic of claim 7, **characterized in that**, the plurality of fluorescent particles is oxide, the matrix comprises at least one of Al₂O₃ and MgO; or
the plurality of fluorescent particles is nitride, the matrix comprises at least one of γ-AlON, BN, and AlN; or
the plurality of fluorescent particles (200) comprises β-Sialon:Eu²⁺, the matrix comprises γ-AlON.

9. The fluorescent ceramic of claim 1, **characterized in that**, the fluorescent ceramic further comprises a grain boundary phase distributed between the high-refractive-index phase and the matrix.

10. The fluorescent ceramic of claim 9, **characterized in that**, a volume of the grain boundary phase accounts for 1 % to 5 % of a total volume of the fluorescent ceramic.

11. The fluorescent ceramic of claim 9, **characterized in that**, the grain boundary phase is formed by a reaction between a portion of the high-refractive-index phase and the matrix during a sintering process.

12. The fluorescent ceramic of claim 9, **characterized in that**, the fluorescent ceramic further comprises a plurality of pores, and a sum of volumes of the plurality of pores is less than 5 % of a total volume of the fluorescent ceramic.

13. A preparation method for the fluorescent ceramic of any one of claims 1 to 12, **characterized by** comprising:
mixing a plurality of high-refractive-index phase precursors with a plurality of fluorescent particles to obtain a mixture;
adding a dispersant and a binder into the mixture to form a slurry, and vacuum drying the slurry to obtain a composite powder; and
mixing and pre-sintering the composite powder with a matrix, and sintering the composite powder and the matrix to form the fluorescent ceramic.

14. The preparation method of claim 13, **characterized in that**, a particle size of each of the plurality of the high-refractive-index phase precursors is 0.4 µm to 1 µm.

15. A light-emitting device, **characterized by** comprising an excitation light source and the fluorescent ceramic of any one of claims 1 to 12, the excitation light source being configured to excite the fluorescent ceramic to produce stimulated light.
